# FASCICULE DE BREVET EUROPEEN

(11) **EP 2 374 207 B1**
(45) Date de publication et mention de la délivrance du brevet: **07.11.2018**
(21) Numéro de dépôt: 08875651.5
(22) Date de dépôt: 08.12.2008
(51) Int. Cl.: H02P 9/10, H02J 7/14

(54) **MACHINE ÉLECTRIQUE TOURNANTE DÉSTINÉE A ETRE MONTÉE SUR UN VÉHICULE AUTOMOBILE**
ELEKTRISCHE DREHMASCHINE ZUR ANBRINGUNG AN EINEM AUTOMOBIL
ROTATING ELECTRIC MACHINE FOR MOUNTING ONTO AN AUTOMOBILE

(43) Date de publication de la demande: 12.10.2011
(73) Titulaire: Valeo Equipements Electriques Moteur, 94046 Créteil Cedex (FR)
(72) Inventeur: BODIN, Ludovic, 94046 Creteil Cedex (FR); CHEMIN, Michaël, 94046 Creteil Cedex (FR)
(74) Mandataire: de Lambilly Delorme, Marie Pierre
(86) Numéro de dépôt international: PCT/FR2008/052246
(87) Numéro de publication internationale: WO 2010/066953

(56) Documents cités:
- EP-A- 0 462 503
- EP-A- 1 098 420
- GB-A- 2 401 203
- US-A1- 2004 150 233

## Description

La présente invention concerne une machine électrique tournante, notamment pour véhicule automobile, capable de fonctionner en alternateur.

On connaît par le brevet US 6 995 544 un système de contrôle pour alternateur électrique comportant:
- un premier comparateur de température permettant de déclencher une limitation d'une tension de commande (résultant en une limitation du courant délivré dans l'alternateur) lorsque la température de l'alternateur atteint une première température d'activation,
- un deuxième comparateur de température permettant de déclencher une interruption du courant délivré dans l'alternateur lorsque la température de l'alternateur atteint une seconde température d'activation supérieure à la première.

Par ailleurs, sur des alterno-démarreurs connus, le rapport cyclique associé à l'excitation du rotor est limité, en fonctionnement en alternateur, à une valeur mémorisée dans une table et choisie en fonction de la vitesse de rotation de l'alterno-démarreur afin d'éviter une surchauffe de celui-ci. La table précitée contient des valeurs de rapport cyclique mesurées sur un banc dans des conditions de température maximale, ce qui assure une marge de sécurité pour éviter toute surchauffe.

Le document EP 1098420 décrit un système programmable de régulation d'un alternateur qui est adaptable pour différentes configurations d'alternateur. Le document EP 0462 503 décrit une machine électrique tournante suivant le préambule de la revendication 1.

L'invention vise notamment à améliorer la performance d'une machine électrique tournante capable de fonctionner en alternateur.

L'invention a ainsi pour objet une machine électrique tournante, notamment pour véhicule automobile, suivant la revendication 1.

L'invention permet notamment de réguler de manière dynamique, en tenant compte de la température, la grandeur électrique de la machine, ce qui permet à celle-ci de fonctionner avec une performance optimale. Ceci est particulièrement avantageux lorsque la machine fonctionne dans un environnement où la température est bien inférieure à une valeur maximale admise. La plage de fonctionnement de la machine peut ainsi être élargie.

De préférence, la machine électrique tournante comprend un rotor et la grandeur électrique est associée au rotor.

Dans un exemple de mise en oeuvre de l'invention, la grandeur électrique contrôlée correspond à un courant rotorique.

En variante, la grandeur électrique contrôlée correspond à une tension rotorique ou à un rapport cyclique.

Selon l'invention, l'unité de contrôle est agencée pour, lorsque la grandeur électrique de la machine présente une valeur supérieure à la valeur seuil déterminée, réduire la valeur de la grandeur électrique sensiblement à la valeur seuil déterminée.

De plus selon l'invention, l'unité de contrôle est agencée pour contrôler la grandeur électrique à la fois en fonction de la température de la machine et en fonction de la vitesse de rotation du rotor, ce qui permet d'augmenter la performance de la machine électrique.

De préférence, la machine électrique tournante est un alterno-démarreur.

En variante, la machine électrique est un alternateur.

Dans un exemple de mise en oeuvre de l'invention, l'unité de contrôle peut être agencée pour:
- recevoir une information représentative de la température de la machine électrique, une information représentative de la vitesse de rotation du rotor, et une information représentative du courant rotorique,
- déterminer, en fonction des informations représentatives de la température et de la vitesse, une valeur seuil du courant rotorique,
- comparer l'information représentative du courant rotorique à la valeur seuil déterminée, et
- contrôler le courant rotorique en fonction de ladite comparaison.

Dans un autre exemple de mise en oeuvre de l'invention, l'unité de contrôle est agencée pour:
- recevoir une information représentative de la température de la machine électrique, une information représentative de la vitesse de rotation du rotor, et une information représentative de la tension rotorique,
- déterminer, en fonction des informations représentatives de la température et de la vitesse, une valeur seuil de la tension rotorique,
- comparer l'information représentative de la tension rotorique à la valeur seuil déterminée, et
- contrôler la tension rotorique en fonction de ladite comparaison.

Encore dans un autre exemple de mise en oeuvre de l'invention, l'unité de contrôle est agencée pour:
- traiter une information représentative de la température de la machine électrique, une information représentative de la vitesse de rotation du rotor, et une information représentative du rapport cyclique,
- déterminer, en fonction des informations représentatives de la température et de la vitesse, une valeur seuil du rapport cyclique,
- comparer l'information représentative du rapport cyclique à la valeur seuil déterminée, et
- contrôler le rapport cyclique en fonction de ladite comparaison.

Avantageusement, au moins un capteur de température peut être prévu pour mesurer la température de la machine. Le capteur de température peut être placé sur un carter de la machine électrique. Ce capteur peut par exemple être disposé sur un support d'un capteur de vitesse de la machine.

En variante, la machine comportant un stator comprenant des enroulements statoriques et un corps statorique, le capteur de température peut être agencée pour mesurer une température associée au stator, notamment à un enroulement statorique ou au corps statorique.

Si on le souhaite, l'unité de contrôle est agencée pour contrôler la grandeur électrique comme décrit ci-dessus, seulement lorsque la température de la machine, notamment celle du stator, dépasse une valeur prédéterminée.

L'invention concerne également un système comportant une machine électrique tournante telle que définie ci-dessus et une unité de stockage d'énergie.

L'unité de stockage d'énergie peut comporter par exemple au moins un super-condensateur.

Selon un aspect de l'invention, le système précité comporte une batterie, par exemple une batterie au plomb, et un convertisseur continu-continu interposé entre l'unité de stockage d'énergie et la batterie.

L'invention a également pour objet un système comportant une unité de stockage d'énergie, une machine électrique tournante comportant un rotor et une unité de contrôle agencée pour:
- traiter une information représentative de la température de la machine électrique, une information représentative de la vitesse de rotation du rotor, une information représentative de la tension délivrée par l'unité de stockage d'énergie, et une information représentative du rapport cyclique,
- déterminer, en fonction des informations représentatives de la température, de la vitesse et de la tension délivrée par l'unité de stockage d'énergie, une valeur seuil du rapport cyclique,
- comparer l'information représentative du rapport cyclique à la valeur seuil déterminée, et
- contrôler le rapport cyclique en fonction de ladite comparaison.

L'invention pourra être mieux comprise à la lecture de la description détaillée qui va suivre, d'exemples de mise en oeuvre non limitatifs de l'invention, et à l'examen du dessin annexé, sur lequel :
- la figure 1 représente, schématiquement et partiellement, une machine électrique tournante conforme à un exemple de mise en oeuvre de l'invention,
- la figure 2 correspond à un schéma-blocs illustrant différentes étapes de fonctionnement de la machine de la figure 1,
- les figures 3, 5 et 7 représentent, schématiquement et partiellement, trois autres exemples de machine conforme l'invention, et
- les figures 4, 6 et 8 correspondent à des schémas-blocs illustrant différentes étapes de fonctionnement de la machine respectivement des exemples de mise en oeuvre des figures 3, 5 et 7.

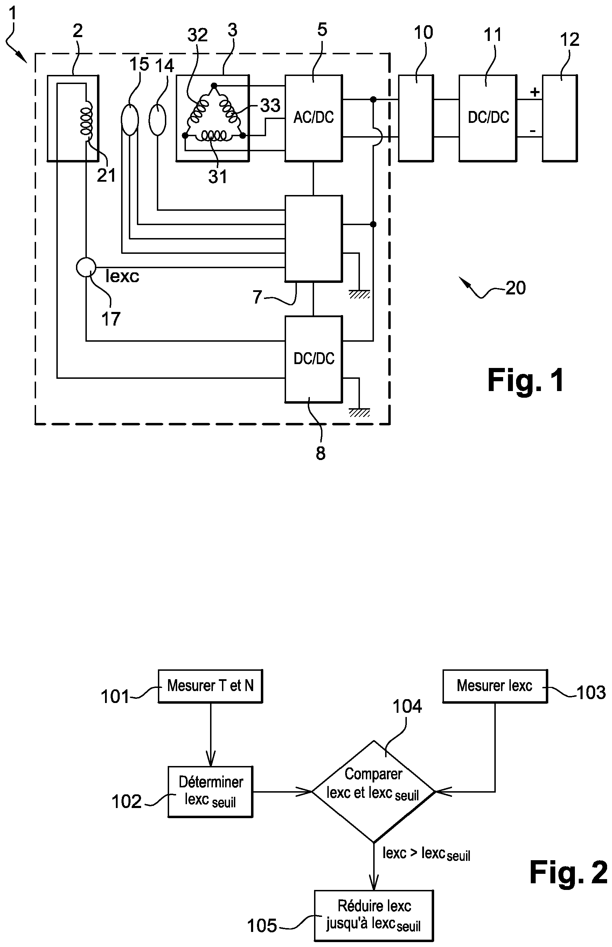

On a représenté sur la figure 1 un système 20 comportant une machine électrique tournante réversible polyphasée 1 formée, dans l'exemple considéré, par un alterno-démarreur de véhicule automobile.

Cet alterno-démarreur 1 est capable, outre d'être entraîné en rotation par un moteur thermique pour produire de l'énergie électrique (mode alternateur), de transmettre un couple à ce moteur thermique pour un démarrage (mode démarreur).

Cet alterno-démarreur 1 est, dans l'exemple décrit, utilisé dans une architecture de type à freinage récupératif, afin de transformer une partie de l'énergie mécanique issue d'un freinage en énergie électrique.

Cette énergie électrique récupérée est stockée dans une unité de stockage d'énergie 10 comportant un ou plusieurs super-condensateurs.

L'alterno-démarreur 1 comporte, d'une part, un stator 3 comprenant des enroulements 31, 32 et 33 formant dans l'exemple décrit trois phases, et d'autre part, un rotor 2 comprenant un enroulement 21.

Les enroulements 31, 32 et 33 du stator 3 sont disposés suivant un montage en triangle, sans point neutre. Dans une variante non représentée, les enroulements peuvent être disposés suivant un montage en étoile, avec un point neutre.

Les phases du stator 3 sont reliées à un convertisseur 5 réversible alternatif-continu (AC/DC).

Sont reliés en série au convertisseur 5 AC/DC, l'unité de stockage 10, un premier convertisseur 11 réversible de tension continu-continu (DC/DC) et une batterie 12.

La batterie 12 peut comprendre une batterie d'alimentation classique, par exemple de type batterie au plomb, ou NiMH (Nickel Métal Hydrure).

L'unité de stockage d'énergie 10 et la batterie 12 permettent d'alimenter des réseaux électriques comprenant des consommateurs électriques du véhicule, par exemple des phares, une radio, une climatisation, des essuie-glaces.

L'unité de stockage d'énergie 10 et la batterie 12 présentent chacune une valeur de tension maximale. La valeur de tension maximale de l'unité de stockage d'énergie 10, par exemple 28V, est supérieure à celle de la batterie 12, par exemple 14V. Les réseaux électriques peuvent être alimentés avec des tensions différentes, prises sur l'unité de stockage d'énergie 10 ou la batterie 12, en fonction de la charge électrique requise par ces réseaux électriques.

L'enroulement 21 du rotor 2 est relié en série avec un second convertisseur 8 continu-continu (DC/DC) alimenté par l'unité de stockage d'énergie 10.

La machine électrique 1 comporte en outre une unité de contrôle 7 reliée aux convertisseurs 5 et 8 et pouvant être alimentée par l'unité de stockage 10.

En variante, l'unité de contrôle 7 peut être alimentée par la batterie 12.

L'unité de contrôle 7 peut comporter par exemple un microcontrôleur ou un ASIC (Application-Specific Integrated Circuit).

L'unité de contrôle 7 est agencée pour recevoir une information représentative de la température de l'alterno-démarreur 1 provenant d'un capteur de température 14 placé par exemple sur un carter de l'alterno-démarreur 1.

La température T mesurée est ainsi une température ambiante de la machine 1.

En variante, à la place d'une température T ambiante de la machine 1, il est possible de mesurer une température associée aux enroulements 31, 32 et 33 du stator 3 ou au corps du stator 3.

Le capteur de température 14 peut par exemple être de type "NTC" (Negative Temperature Coefficient), pourvu d'une résistance à coefficient négatif.

L'unité de contrôle 7 est également agencée pour recevoir une information représentative de la vitesse de rotation du rotor 2 provenant d'un capteur de vitesse 15.

Le capteur de vitesse 15 peut être disposé à proximité du capteur de température 14.

Les capteurs 14 et 15 peuvent notamment être fixés sur un support commun, l'ensemble étant placé sur la machine électrique 1.

En outre, l'unité de contrôle 7 est agencée pour recevoir une information représentative du courant rotorique (lexc) provenant d'un capteur de courant 17.

Dans l'exemple décrit, il n'est pas nécessaire de réaliser des mesures de tension aux bornes de l'unité de stockage d'énergie 10.

Dans le mode démarreur, l'unité de contrôle 7 commande le convertisseur 5 en vue de prélever une tension continue provenant de l'unité de stockage d'énergie 10 pour alimenter chaque phase du stator 3 en tension alternative.

Dans le mode alternateur, en fonctionnement normal ou en freinage récupératif, l'unité de contrôle 7 commande le convertisseur 5 en vue de prélever des tensions alternatives provenant des phases du stator 3 pour, d'une part, charger l'unité de stockage d'énergie 10 et la batterie 12 en tension continue, et d'autre part, alimenter le réseau de bord en tension continue.

L'unité de stockage d'énergie 10 peut être chargée, notamment en freinage récupératif, avec une valeur de tension supérieure à la valeur de tension maximale de la batterie 12. Le cas échéant, le premier convertisseur 11 permet des transferts d'énergie électrique entre l'unité de stockage d'énergie 10 et la batterie 12 en abaissant la tension à destination de cette batterie 12.

On va maintenant décrire plus en détail, en référence à la figure 2, la manière dont l'unité de contrôle 7 permet d'optimiser la valeur lexc lorsque la machine 1 fonctionne en alternateur.

Cette unité de contrôle 7 est agencée pour, en fonction d'informations représentatives de la température T de la machine 1 et de la vitesse de rotation N du rotor 2 mesurées et envoyées par les capteurs 14 et 15 (étape 101), déterminer une valeur seuil Iexcₛₑᵤᵢₗ du courant rotorique (étape 102).

Dans l'exemple considéré, la valeur seuil Iexcₛₑᵤᵢₗ est sélectionnée dans une table mémorisée dans l'unité de contrôle 7, cette table contenant une pluralité de valeurs seuil associées à différentes températures T et vitesses de rotation N prédéterminées. Ces valeurs seuil sont calculées lors d'essais préalables.

L'unité de contrôle 7 permet ensuite de comparer (étape 104) une valeur du courant lexc mesurée et envoyée par le capteur 17 (étape 103) à la valeur seuil lexcₛₑᵤᵢₗ déterminée.

Si la comparaison résulte en une valeur lexc supérieure à Iexcₛₑᵤᵢₗ, l'unité de contrôle 7 commande le convertisseur DC/DC 8 afin d'abaisser le courant lexc à la valeur lexcₛₑᵤᵢₗ (étape 105).

Ainsi, l'invention permet de réguler le courant rotorique lexc de manière dynamique, en fonction de la température T et de la vitesse N de l'alterno-démarreur 1, ce qui permet à celui-ci de fonctionner avec une performance optimale.

Dans l'exemple qui vient d'être décrit, l'unité de contrôle 7 est agencée pour agir sur le courant lexc.

On ne sort pas du cadre de la présente invention lorsque l'unité de contrôle 7 est agencée pour agir sur une grandeur électrique autre que l'intensité du courant lexc.

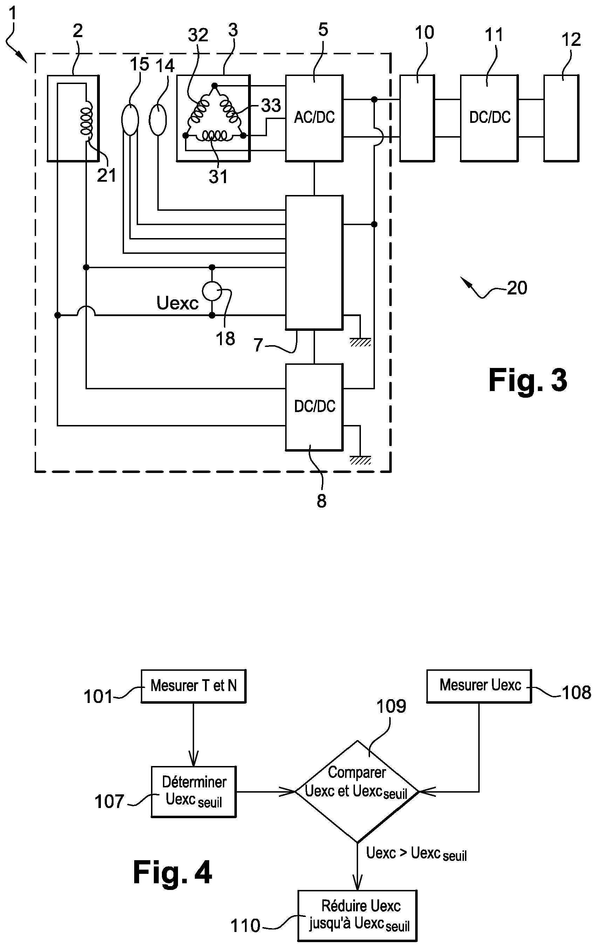

Par exemple, comme illustré sur la figure 3, le capteur 17 du courant lexc peut être remplacé par un capteur 18 de la tension Uexc d'excitation du rotor 2.

Dans cet exemple de réalisation, l'unité de contrôle 7 détermine en fonction d'informations représentatives de la température T de la machine 1 et de la vitesse de rotation N du rotor 2, une valeur seuil de tension Uexcₛₑᵤᵢₗ (étape 107 de la figure 4) et compare (étape 109) une valeur Uexc mesurée par le capteur 18 (étape 108) à cette valeur Uexcₛₑᵤᵢₗ.

Si la comparaison résulte en une valeur Uexc supérieure à Uexcₛₑᵤᵢₗ, l'unité de contrôle 7 commande le convertisseur DC/DC 8 afin d'abaisser la tension Uexc à la valeur Uexcₛₑᵤᵢₗ (étape 110).

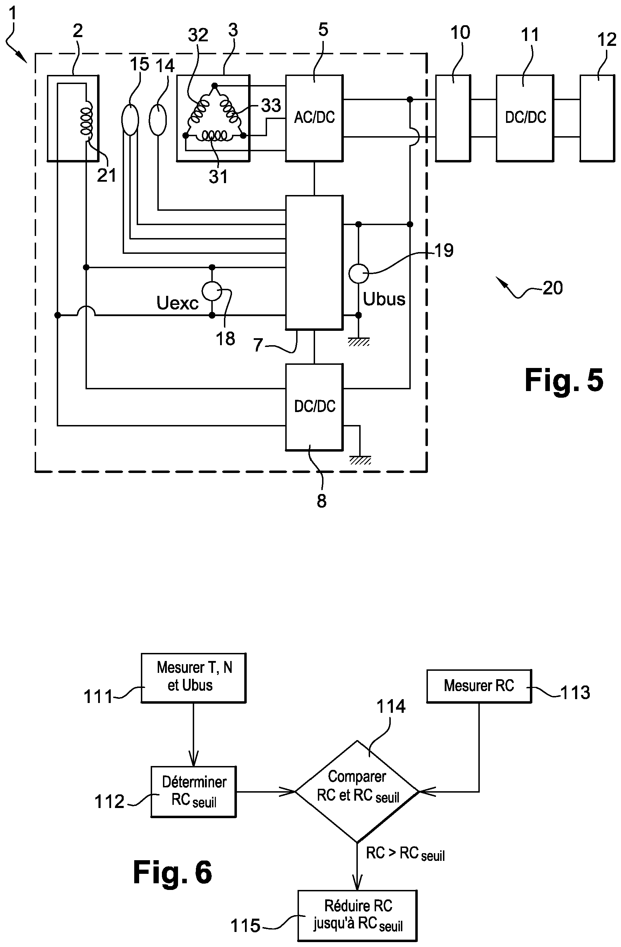

Dans un autre exemple de mise en oeuvre de l'invention, comme illustré à la figure 5, l'unité de contrôle 7 est agencée pour déterminer une information représentative du rapport cyclique (RC) provenant de capteurs de tension 18 et 19.

Le rapport cyclique correspond au rapport de la tension Uexc d'excitation mesurée par le capteur 18 sur la tension Ubus délivrée par l'unité de stockage d'énergie 10 et mesurée par le capteur 19.

L'unité de contrôle 7 est agencée pour, en fonction d'informations représentatives de la température T de la machine 1, de la vitesse de rotation N du rotor 2, et de la tension Ubus, mesurées et envoyées respectivement par les capteurs 14, 15 et 19 (étape 111 de la figure 6), déterminer une valeur seuil du rapport cyclique RCₛₑᵤᵢₗ (étape 112).

La valeur seuil RCₛₑᵤᵢₗ est sélectionnée dans une table mémorisée dans l'unité de contrôle 7, cette table contenant une pluralité de valeurs seuil associées à différentes températures T, vitesses de rotation N et tensions Ubus prédéterminées.

L'unité de contrôle 7 compare ensuite (étape 114) une valeur du rapport cyclique RC mesurée et envoyée par les capteurs 18 et 19 (étape 113) à la valeur seuil RCₛₑᵤᵢₗ déterminée.

Si la comparaison résulte en une valeur RC supérieure à RCₛₑᵤᵢₗ, l'unité de contrôle 7 commande le convertisseur DC/DC 8 afin d'abaisser le rapport cyclique RC à la valeur RCₛₑᵤᵢₗ (étape 115).

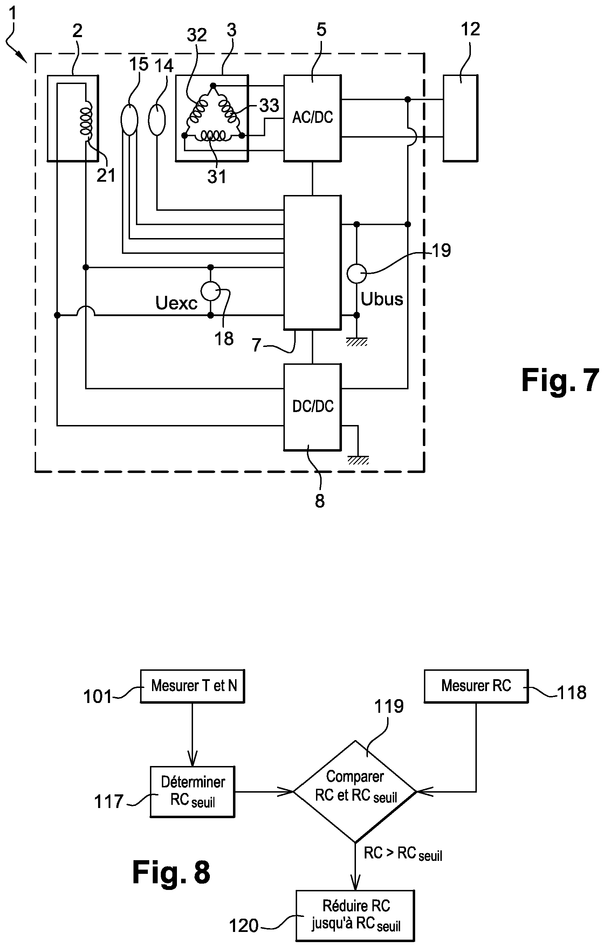

On a représenté sur la figure 7 un autre exemple de réalisation d'une machine conforme à l'invention, dépourvue du convertisseur 11 DC/DC et d'unité de stockage d'énergie 10.

La batterie 12 est reliée en série directement au convertisseur 5 AC/DC, le fonctionnement en freinage récupératif n'étant pas disponible dans ce mode de réalisation.

Dans cet exemple de réalisation, l'unité de contrôle 7 détermine en fonction d'informations représentatives de la température T et de la vitesse de rotation N du rotor 2, une valeur seuil de rapport cyclique RCₛₑᵤᵢₗ (étape 117 de la figure 8) et compare (étape 119) une valeur RC mesurée par les capteurs 18 et 19 (étape 118) à cette valeur RCₛₑᵤᵢₗ.

Si la comparaison résulte en une valeur RC supérieure à RCₛₑᵤᵢₗ, l'unité de contrôle 7 commande le convertisseur DC/DC 8 afin d'abaisser le rapport cyclique RC à la valeur RCₛₑᵤᵢₗ (étape 120).

## Revendications

1. Machine électrique tournante (1), notamment pour véhicule automobile, capable de fonctionner au moins en alternateur comportant une unité de contrôle (7) agencée pour:
• traiter une information représentative de la température (T) de la machine électrique (1), traiter une information représentative de la vitesse de rotation (N) d'un rotor (2) de la machine électrique (1) et une information représentative d'une grandeur électrique de la machine électrique (1) **caractérisé en ce que** l'unité de contrôle est agencée pour
• déterminer, au moins en fonction de l'information représentative de la température (T) et de la vitesse de rotation (N), une valeur seuil de la grandeur électrique,
• comparer l'information représentative de la grandeur électrique à la valeur seuil déterminée, et
• contrôler la grandeur électrique en fonction de ladite comparaison
• l'unité de contrôle (7) étant agencée pour, lorsque la grandeur électrique de la machine (1) présente une valeur supérieure à la valeur seuil déterminée, réduire la valeur de la grandeur électrique sensiblement à la valeur seuil déterminée.

2. Machine selon la revendication précédente, comportant un rotor (2), **caractérisée par le fait que** la grandeur électrique contrôlée correspond à un courant rotorique (lexc).

3. Machine selon la revendication 1, comportant un rotor (2), **caractérisée par le fait que** la grandeur électrique contrôlée correspond à une tension rotorique (Uexc).

4. Machine selon la revendication 1, comportant un rotor (2), **caractérisée par le fait que** la grandeur électrique contrôlée correspond à un rapport cyclique (RC) associé au rotor (2).

5. Machine selon l'une quelconque des revendications précédentes, **caractérisée par le fait que** la machine électrique tournante (1) est un alterno-démarreur.

6. Machine selon la revendication 2 et éventuellement la revendication 5, **caractérisée par le fait que** l'unité de contrôle (7) est agencée pour:
- recevoir une information représentative de la température (T) de la machine électrique (1), une information représentative de la vitesse de rotation (N) du rotor (2), et une information représentative du courant rotorique (lexc),
- déterminer, en fonction des informations représentatives de la température (T) et de la vitesse (N), une valeur seuil du courant rotorique (Iexcₛₑᵤᵢₗ),
- comparer l'information représentative du courant rotorique (Iexc) à la valeur seuil déterminée (Iexcₛₑᵤᵢₗ), et
- contrôler le courant rotorique (lexc) en fonction de ladite comparaison.

7. Machine selon la revendication 3 et éventuellement la revendication 5, **caractérisée par le fait que** l'unité de contrôle (7) est agencée pour:
- recevoir une information représentative de la température (T) de la machine électrique (1), une information représentative de la vitesse de rotation (N) du rotor (2), et une information représentative de la tension rotorique (Uexc),
- déterminer, en fonction des informations représentatives de la température (T) et de la vitesse (N), une valeur seuil de la tension rotorique (Uexcₛₑᵤᵢₗ),
- comparer l'information représentative de la tension rotorique (Uexc) à la valeur seuil déterminée (Uexcₛₑᵤᵢₗ), et
- contrôler la tension rotorique (Uexc) en fonction de ladite comparaison.

8. Machine selon les revendications 4 et éventuellement la revendication 5, **caractérisée par le fait que** l'unité de contrôle (7) est agencée pour:
- traiter une information représentative de la température (T) de la machine électrique (1), une information représentative de la vitesse de rotation (N) du rotor (2), et une information représentative du rapport cyclique (RC),
- déterminer, en fonction des informations représentatives de la température (T) et de la vitesse (N), une valeur seuil du rapport cyclique (RC),
- comparer l'information représentative du rapport cyclique (RC) à la valeur seuil déterminée (RCₛₑᵤᵢₗ), et
- contrôler le rapport cyclique (RC) en fonction de ladite comparaison.

9. Machine selon l'une des revendications précédentes, comportant un capteur de vitesse (15) de la machine (1) et au moins un capteur de température (14), le capteur de vitesse (15) étant disposé sur un support, **caractérisée par le fait que** le capteur de température (14) est disposé sur le support du capteur de vitesse (15).

10. Machine selon l'une quelconque des revendications précédentes, comportant un stator (3) comprenant des enroulements statoriques (31, 32, 33) et un corps statorique, un capteur de température (14), **caractérisée par le fait que** le capteur de température (14) est agencé pour mesurer une température (T) associée au stator (3), notamment à un enroulement (31, 32, 33) statorique ou au corps statorique.

11. Système (20) comportant une machine électrique tournante (1) selon l'une quelconque des revendications précédentes et une unité de stockage d'énergie (10).

12. Système (20) selon la revendication 11, comportant une batterie (12), **caractérisé par le fait qu'**il comporte un convertisseur continu-continu (11) interposé entre l'unité de stockage d'énergie (10) et la batterie (12).

## Patentansprüche

1. Rotierende elektrische Maschine (1), insbesondere für ein Kraftfahrzeug, die in der Lage ist, wenigstens als Wechselstromgenerator zu arbeiten, und eine Steuereinheit (7) aufweist, die dafür ausgelegt ist:
• eine Information zu verarbeiten, die für die Temperatur (T) der elektrischen Maschine (1) repräsentativ ist, eine Information zu verarbeiten, die für die Drehzahl (N) eines Rotors (2) der elektrischen Maschine (1) repräsentativ ist, und eine Information, die für eine elektrische Größe der elektrischen Maschine (1) repräsentativ ist, **dadurch gekennzeichnet, dass** die Steuereinheit dafür ausgelegt ist,
• wenigstens in Abhängigkeit von den Informationen, die für die Temperatur (T) und für die Drehzahl (N) repräsentativ sind, einen Schwellenwert der elektrischen Größe zu bestimmen,
• die Information, die für die elektrische Größe repräsentativ ist, mit dem bestimmten Schwellenwert zu vergleichen, und
• die elektrische Größe in Abhängigkeit von dem Vergleich zu steuern,
• wobei die Steuereinheit (7) dafür ausgelegt ist, wenn die elektrische Größe der Maschine (1) einen Wert aufweist, der größer als der bestimmte Schwellenwert ist, den Wert der elektrischen Größe im Wesentlichen auf den bestimmten Schwellenwert zu verringern.

2. Maschine nach dem vorhergehenden Anspruch, welche einen Rotor (2) aufweist, **dadurch gekennzeichnet, dass** die gesteuerte elektrische Größe einem Rotorstrom (Iexc) entspricht.

3. Maschine nach Anspruch 1, welche einen Rotor (2) aufweist, **dadurch gekennzeichnet, dass** die gesteuerte elektrische Größe einer Rotorspannung (Uexc) entspricht.

4. Maschine nach Anspruch 1, welche einen Rotor (2) aufweist, **dadurch gekennzeichnet, dass** die gesteuerte elektrische Größe einem Tastverhältnis (RC) entspricht, das dem Rotor (2) zugeordnet ist.

5. Maschine nach einem der vorhergehenden Ansprüche, **dadurch gekennzeichnet, dass** die rotierende elektrische Maschine (1) ein Startergenerator ist.

6. Maschine nach Anspruch 2 und eventuell Anspruch 5, **dadurch gekennzeichnet, dass** die Steuereinheit (7) dafür ausgelegt ist:
- eine Information, die für die Temperatur (T) der elektrischen Maschine (1) repräsentativ ist, eine Information, die für die Drehzahl (N) des Rotors (2) repräsentativ ist, und eine Information, die für den Rotorstrom (Iexc) repräsentativ ist, zu empfangen,
- in Abhängigkeit von den Informationen, die für die Temperatur (T) und für die Drehzahl (N) repräsentativ sind, einen Schwellenwert des Rotorstroms (Iexcₛₑᵤᵢₗ) zu bestimmen,
- die Information, die für den Rotorstrom (Iexc) repräsentativ ist, mit dem bestimmten Schwellenwert (Iexcₛₑᵤᵢₗ) zu vergleichen, und
- den Rotorstrom (Iexc) in Abhängigkeit von dem Vergleich zu steuern.

7. Maschine nach Anspruch 3 und eventuell Anspruch 5, **dadurch gekennzeichnet, dass** die Steuereinheit (7) dafür ausgelegt ist:
- eine Information, die für die Temperatur (T) der elektrischen Maschine (1) repräsentativ ist, eine Information, die für die Drehzahl (N) des Rotors (2) repräsentativ ist, und eine Information, die für die Rotorspannung (Uexc) repräsentativ ist, zu empfangen,
- in Abhängigkeit von den Informationen, die für die Temperatur (T) und für die Drehzahl (N) repräsentativ sind, einen Schwellenwert der Rotorspannung (Uexcₛₑᵤᵢₗ) zu bestimmen,
- die Information, die für die Rotorspannung (Uexc) repräsentativ ist, mit dem bestimmten Schwellenwert (Uexcₛₑᵤᵢₗ) zu vergleichen, und
- die Rotorspannung (Uexc) in Abhängigkeit von dem Vergleich zu steuern.

8. Maschine nach Anspruch 4 und eventuell Anspruch 5, **dadurch gekennzeichnet, dass** die Steuereinheit (7) dafür ausgelegt ist:
- eine Information, die für die Temperatur (T) der elektrischen Maschine (1) repräsentativ ist, eine Information, die für die Drehzahl (N) des Rotors (2) repräsentativ ist, und eine Information, die für das Tastverhältnis (RC) repräsentativ ist, zu verarbeiten,
- in Abhängigkeit von den Informationen, die für die Temperatur (T) und für die Drehzahl (N) repräsentativ sind, einen Schwellenwert des Tastverhältnisses (RC) zu bestimmen,
- die Information, die für das Tastverhältnis (RC) repräsentativ ist, mit dem bestimmten Schwellenwert (RCₛₑᵤᵢₗ) zu vergleichen, und
- das Tastverhältnis (RC) in Abhängigkeit von dem Vergleich zu steuern.

9. Maschine nach einem der vorhergehenden Ansprüche, welche einen Drehzahlsensor (15) der Maschine (1) und wenigstens einen Temperatursensor (14) aufweist, wobei der Drehzahlsensor (15) auf einem Träger angeordnet ist, **dadurch gekennzeichnet, dass** der Temperatursensor (14) auf dem Träger des Drehzahlsensors (15) angeordnet ist.

10. Maschine nach einem der vorhergehenden Ansprüche, welche einen Stator (3), der Statorwicklungen (31, 32, 33) und einen Statorkörper umfasst, und einen Temperatursensor (14) aufweist, **dadurch gekennzeichnet, dass** der Temperatursensor (14) dafür ausgelegt ist, eine Temperatur (T) zu messen, die dem Stator (3) zugeordnet ist, insbesondere einer Statorwicklung (31, 32, 33) oder dem Statorkörper.

11. System (20), welches eine rotierende elektrische Maschine (1) nach einem der vorhergehenden Ansprüche und eine Energiespeichereinheit (10) umfasst.

12. System (20) nach Anspruch 11, welches eine Batterie (12) aufweist, **dadurch gekennzeichnet, dass** es einen DC-DC-Wandler (11) aufweist, der zwischen der Energiespeichereinheit (10) und der Batterie (12) angeordnet ist.

## Claims

1. Rotary electric machine (1), in particular for a motor vehicle, capable of operating at least in alternator mode including a control unit (7) arranged:
• to process an item of information representative of the temperature (T) of the electric machine (1), to process an item of information representative of the speed of rotation (N) of a rotor (2) of the electric machine (1) and an item of information representative of an electrical quantity of the electric machine (1), **characterized in that** the control unit is arranged
• to determine, at least according to the item of information representative of the temperature (T) and of the speed of rotation (N), a threshold value of the electrical quantity;
• to compare the item of information representative of the electrical quantity with the determined threshold value; and
• to control the electrical quantity according to said comparison
• the control unit (7) being arranged, when the value of the electrical quantity of the machine (1) is higher than the determined threshold value, to decrease the value of the electrical quantity substantially to the determined threshold value.

2. Machine according to the preceding claim, including a rotor (2), **characterized in that** the controlled electrical quantity corresponds to a rotor current (Iexc).

3. Machine according to Claim 1, including a rotor (2), **characterized in that** the controlled electrical quantity corresponds to a rotor voltage (Uexc).

4. Machine according to Claim 1, including a rotor (2), **characterized in that** the controlled electrical quantity corresponds to a duty cycle (RC) associated with the rotor (2).

5. Machine according to any one of the preceding claims, **characterized in that** the rotary electric machine (1) is a starter-alternator.

6. Machine according to Claim 2 and optionally Claim 5, **characterized in that** the control unit (7) is arranged:
- to receive an item of information representative of the temperature (T) of the electric machine (1), an item of information representative of the speed of rotation (N) of the rotor (2), and an item of information representative of the rotor current (Iexc);
- to determine, according to the items of information representative of the temperature (T) and of the speed (N), a threshold value of the rotor current (Iexcₛₑᵤᵢₗ);
- to compare the item of information representative of the rotor current (Iexc) with the determined threshold value (Iexcₛₑᵤᵢₗ); and
- to control the rotor current (Iexc) according to said comparison.

7. Machine according to Claim 3 and optionally Claim 5, **characterized in that** the control unit (7) is arranged:
- to receive an item of information representative of the temperature (T) of the electric machine (1), an item of information representative of the speed of rotation (N) of the rotor (2), and an item of information representative of the rotor voltage (Uexc);
- to determine, according to the items of information representative of the temperature (T) and of the speed (N), a threshold value of the rotor voltage (Uexcₛₑᵤᵢₗ) ;
- to compare the item of information representative of the rotor voltage (Uexc) with the determined threshold value (Uexcₛₑᵤᵢₗ) ; and
- to control the rotor voltage (Uexc) according to said comparison.

8. Machine according to Claim 4 and optionally Claim 5, **characterized in that** the control unit (7) is arranged:
- to process an item of information representative of the temperature (T) of the electric machine (1), an item of information representative of the speed of rotation (N) of the rotor (2), and an item of information representative of the duty cycle (RC);
- to determine, according to the items of information representative of the temperature (T) and of the speed (N), a threshold value of the duty cycle (RC);
- to compare the item of information representative of the duty cycle (RC) with the determined threshold value (RCₛₑᵤᵢₗ) ; and
- to control the duty cycle (RC) according to said comparison.

9. Machine according to one of the preceding claims, including a speed sensor (15) for detecting the speed of the machine (1) and at least one temperature sensor (14), the speed sensor (15) being arranged on a carrier, **characterized in that** the temperature sensor (14) is arranged on the carrier of the speed sensor (15).

10. Machine according to any one of the preceding claims, including a stator (3) comprising stator windings (31, 32, 33) and a stator body, a temperature sensor (14), **characterized in that** the temperature sensor (14) is arranged to measure a temperature (T) associated with the stator (3), in particular with a stator winding (31, 32, 33) or with the stator body.

11. System (20) including a rotary electric machine (1) according to any one of the preceding claims and an energy storage unit (10).

12. System (20) according to Claim 11, including a battery (12), **characterized in that** it includes a DC-to-DC converter (11) interposed between the energy storage unit (10) and the battery (12).
